# EUROPEAN PATENT APPLICATION

(11) **EP 4 835 865 A1**
(43) Date of publication of application: **04.11.2026**
(21) Application number: 26174877.6
(22) Date of filing: 27.04.2026
(51) Int. Cl.: G09B 21/00

(54) **ASSISTANCE SYSTEM**

(30) Priority: 29.04.2025 EP 25173393
(71) Applicant: Sound Reasoning GmbH, 76185 Karlsruhe (DE)
(72) Inventor: Rustico, Eugenio, 76185 Karlsruhe (DE)
(74) Representative: Zinkler, Franz

(57) **Abstract**

Assistance system for assisting an individual, comprising a distance receiver receiving a distance to an object; a converter for converting the distance into a sound signal having a specific pitch; a sound signal interface outputting the sound signal to the individual; wherein the converter is configured to determine the specific pitch depending on the distance in a non-linear manner. Method for providing a sound signal for assisting an individual, comprising converting a distance into a sound signal having a specific pitch, and determining the specific pitch depending on the distance in a non-linear manner. A computer program for implementing the method when being executed on a computer or signal processor.

## Description

### Technical Field

Embodiments of the invention are related to an apparatus and a method for assisting an individual to understand its physical environment.

### Background of the Invention

Individuals with, for example, severe sight impairment face many difficulties in navigating unfamiliar and/or dynamic environments. Guide dogs can provide support for navigating an environment; however, they cannot assist in understanding the surroundings and it is expensive to train one. A wide spread and cheap device used to roughly examine the close physical surroundings is a walking stick, or referred to as "white cane" [1]. Its shape and color are partially defined by local and international laws. Common versions are foldable or telescopic, made in light materials, equipped with an armband near the handle and a bulge of differing kinds on the opposite end (spherical, rotating, made of specific materials, etc.).

One of the main limitations of the canes is that they do not offer a complete examination of the ground, as the "zigzag" movement used to scan the floor sometimes misses small obstacles; moreover, they cannot be wielded in the air, to "detect" high obstacles or people, because of safety and hygienic reasons. Particularly problematic are undetectable obstacles that can cause falls and injuries, such as open windows (especially indoor), truck doors (especially outdoor), signs and any other protruding structure at waist level or higher.

Canes have been enhanced in multiple ways, such as: built-in [2] or detachable [3] sonars for the detection of near obstacles higher than the ground, vocal guidance [4], and others. One of many limitations of enhanced canes is the additional weight: although white canes are produced in lightweight materials, even the most modern high-end ones rarely weight under 100 grams, and their continuous usage might cause wrist inflammations and other muscle-skeletal problems; any additional load makes the onset of inflammation and pain simply more likely.

A different approach is represented by head-mount devices, typically in the form of augmented glasses [5], helmets [6], or devices for shoulders [7]. These devices are often equipped with one or multiple cameras and an embedded or external mini-computer, which processes the bi- or tri-dimensional data, provided by the camera(s); a high level representation of the information is then produced, such as a description of the environment or indications about the route to be followed. Feedback is most of the time language-based, sometimes haptic [8]. Modern implementations of such products typically rely on Al. Limitations of these devices consist mainly in their weight, bulkiness, or low battery life, due to the relatively high energy requirements of complex computational operations.

Few people are able to complement the usage of a white cane with a technique called human echolocation [9], recalling the biological sonar used by bats and other animals. They produce click-like sounds with their mouth and, by interpreting the echo and reverb produced by such sounds, are able to make a rough estimation about the shape of the environment in front of them. Although it is not possible to retrieve fine grain details, such as the presence or shape of a stone, a human echolocation can allow basic navigation and detection of large obstacles sometimes even without using a stick [10]. This technique typically requires a specialized instructor to be learned. Its main limitations are a low data rate, as humans can produce a limited number of clicks per second, and its reduced applicability to noisy environments or when it is also desired to speak, listen, eat, and so on.

Therefore, it is an object of the invention to provide a concept which is intuitive and easy to understand.

This is achieved by an assistance system of claim 1 or a method for providing a sound signal of claim 22 or a computer program of claim 23.

Further embodiments according to the invention are defined by the subject-matter of the dependent claims of the present application.

### Summary of the Invention

An embodiment of the invention is related to an assistance system for assisting an individual, comprising a distance receiver receiving a distance to an object; a converter for converting the distance into a sound signal having a specific pitch; a sound signal interface outputting the sound signal to the individual; wherein the converter is configured to determine the specific pitch depending on the distance in a non-linear manner.

This embodiment is based on the idea that the individual can interpret his/her surroundings using with the sound signal having the specific pitch that is dependent on the distance to the object. Depending on the specific pitch, the individual can interpret the distance and an understanding of the surrounding can be obtained. By determining the pitch in a non-linear manner, an intuitive distance feeling for individual can be achieved. It has been found that humans perceive changes of the specific pitch in a non-linear manner. This concept can be referred to as "non-linear distance to pitch mapping". It has been found that when the pitch increases linearly, humans perceive a logarithmic acceleration. Due to the non-linear determination of the specific pitch, a linearity of the perception of distance can be preserved. This vastly simplifies the usage of the assistance system according to embodiments. Embodiments of the invention can determine the specific pitch based on the distance using the Weber-Fechner law.

For example, the specific pitch can be determined using a frequency that is linked to the exponent of a power of 2. This equals the progression of frequencies used in most musical systems, including the "12 equal temperament" used in western music, where two pairs of notes are perceived as equal distance if their ratio is equivalent (for example, A3 = 220 Hz is perceived as distant from A4 = 440 Hz, as A4 is from A5 = 880 Hz). Following such progression, the sound of an object which is becoming closer with a linear speed is also perceived as linearly increasing.

Furthermore, the distance can be provided to the assistance system using a small handheld measurement device or an integrated distance measurement device that, for example, is integrated in the clothing or the in the glasses of the individual. This allows the individual to scan the surroundings by moving the measurement device and obtain immediate feedback using the assistance system. According to embodiments, the assistance system can also comprise the measurement device.

Due to the low computational challenge of converting the distance into the sound signal embodiments of the invention can be implemented using energy and weight optimized components which can lead to a lightweight and slim embodiment.

In an embodiment, the distance receiver of the assistance system is a distance measurement device that is configured to obtain the distance as a distance between the distance measurement device and the object; and wherein the distance measurement device uses LIDAR (Light detection and ranging) to measure the distance.

Compared to other distance measurement means (e.g. sonar or imaging) LIDAR devices can have a smaller form factor which allows to reduce weight and bulkiness of embodiments of the invention. Furthermore, LIDAR devices can be used in the dark and in loud acoustic environments. Additionally, compared to other means of measuring a distance, LIDAR devices can have a smaller viewing frustum which can lead to a more precise distance measurement. For example, if using a plurality of distances, the smaller viewing frustum can allow the individual to differentiate between a smooth surface and a rough surface. Therefore embodiments using LIDAR devices can depict an improved user experience for the individual.

In an embodiment, the converter of the assistance system is configured to determine for a first distance a first specific pitch and for a second distance a second specific pitch, wherein the converter is configured to determine the first specific pitch and the second specific pitch such that the first specific pitch is higher than the second specific pitch if the first distance is smaller than the second distance.

This embodiment is based on the idea that humans perceive a higher pitch as more alarming compared to a lower specific pitch. Such a relation of the pitch can allow the individual to more easily learn the use of the assistance system since the relation between high and low pith seems more natural to the individual.

In an embodiment, the converter of the assistance system is configured to determine the specific pitch depending on the distance in an exponential manner.

The use of an exponential function or mapping to determine the specific pitch can lead to an even better intuitive distance feeling for the individual. This embodiment of the invention takes inspiration from the frequency progression used in musical instruments and musical systems. This embodiment can allow the individual to perceive the sound or rather the specific pitch of the distance to an object that is coming closer with a linear speed as linearly increasing.

In an embodiment, the sound signal interface of the assistance system is configured to transmit the sound signal using bone conduction.

The sound signal interface may be connected to a sound signal generating device or may be configured to generate the sound signal itself. Bone-conducting headphones can offer a great solution for assisting the individual. For example, bone-conducting headphones can be safely used in outdoor environments, where sound isolation can be potentially dangerous. Bone-conducting headphones offer the additional advantage that they can be used by individuals who have, in addition to a visual impairment, a temporary or permanent hearing impairment related to the eardrums.

In an embodiment, the sound signal interface of the assistance system is configured to, below a frequency threshold of the specific pitch, reduce a gain linearly with reduced pitch.

Specifically for some sound generating devices low frequencies can be unpleasant to the individual. Therefore, by reducing the gain linearly with reduced pitch, a more pleasant user experience for the individual can be achieved.

In an embodiment, of the assistance system the distance receiver is configured to, as the distance, receive a first distance and a second distance (e.g. associated with different directions; e.g. measured in parallel to each other; e.g. measured parallel at approximately eye width to each other) , wherein the converter is configured to convert the first distance and the second distance into the sound signal as a stereo signal with a first channel having a first specific pitch and with a second channel having a second specific pitch, and the converter is configured to determine the first specific pitch depending on the first distance in a non-linear manner and determine the second specific pitch depending on the second distance in a non-linear manner.

This embodiment can require minimal computational complexity while still being able to depict a difference in between the first distance and the second distance. Due to the individual determination of the specific pitch, this embodiment can be capable of providing the individual with more detailed information and provide an improved assistance. For example, the direction of a movement of a moving object can be determined by the individual using the embodiment, since either the first distance or the second distance is smaller at a first time point and resulting from that either the first pitch or second pitch changes in the non-linear manner. For example, also the slope of a wall can be detected by the individual through the difference in the first specific pitch and the second specific pitch.

In an embodiment, the distance receiver of the assistance system is configured to, as the distance, receive a plurality of distances (e.g. measured on a horizontal plane) each respective distance being associated with a respective direction (e.g. direction in combination with a starting/reference point of the measurement) measurement out of a plurality of directions; and wherein the converter of the assistance system is configured to convert the sound signal as a stereo signal having a first channel and a second channel; wherein the converter is configured to determine a respective preliminary sound signal having a respective specific pitch out of a plurality of preliminary sound signals for each respective distance out of the plurality of distances, depending on the respective distance; wherein the converter is configured to determine the first channel by synthesizing one or more preliminary sound signals of the plurality of preliminary sound signals (e.g. all of them), wherein the converter is configured to add each of the one or more preliminary sound signals with a specific first volume out of one or more first volumes and wherein the converter is configured to determine the second channel by synthesizing one or more preliminary sound signals of the plurality of preliminary sound signals, wherein the converter is configured to add each of the one or more preliminary sound signals with a specific second volume out of one or more second volumes.

The inventors have found that such an embodiment is capable of intuitively present the plurality of distances to the individual. This invention leverages the human capability to locate specific sounds and their origin in the environment. By determining the first channel and the second channel the respective distances can be assigned a respective phantom origin which is easily detectable by the individual. By converting the sound signal using the plurality of distances, a more accurate understanding of the surrounding can be achieved for the individual. Depending on the specific setup of the embodiment, even fine grain details such as the surface texture can be retrieved using the concept provided.

In an embodiment, the sound signal interface of the assistance system is configured to output the first channel at a first origin and the second channel at a second origin (e.g. headphones that output the stereo signal on a left side and on a right side of the head of the individual), and wherein the converter of the assistance system is configured to determine a first respective volume of the respective distance and a second respective volume of the respective distance such that the first respective volume is higher than the second respective volume if the respective direction of the respective distance directs more towards the first origin compared to the second origin.

Utilizing such a connection in between the first respective volume and the second respective volume can achieve a more intuitive understanding of the sound signal by the individual. This in return can lead to the individual needing less time to learn the use of the assistance system. Therefore, in the channel designated for the left ear the leftmost point/distance is heard with the highest volume, and the rightmost point/distance with the lowest volume; and vice versa for the channel designated for the right ear. A point/distance in the middle can have the same volume in both channels thereby indicating to the individual that the object the distance, or rather the preliminary sound signal associated with the distance, is referring to lies straight ahead.

An embodiment of the invention is related to a method for providing a sound signal for assisting an individual, comprising converting a distance into a sound signal having a specific pitch, and determining the specific pitch depending on the distance in a non-linear manner.

The method as described above is based on the same considerations as the above-described assistance system. The method can, by the way, be completed with all features and functionalities, which are also described with regard to the assistance system.

An embodiment of the invention is related to a computer program for implementing the previous method when being executed on a computer, a micro controller or signal processor.

The computer program as described above is based on the same considerations as the above-described assistance system. The computer program can, by the way, be completed with all features and functionalities, which are also described with regard to the assistance system.

### Brief Description of the Drawings

The drawings are not necessarily to scale, emphasis instead generally being placed upon illustrating the principles of the invention. In the following description, various embodiments of the invention are described with reference to the following drawings. In which:
- Fig. 1: shows a schematic view of an assistance system according to an embodiment of the invention;
- Fig. 2: shows a schematic view of an assistance system according to an embodiment of the present invention having two distances to an object;
- Fig. 3: shows a schematic view of an assistance system according to an embodiment of the present invention having three distances to an object;
- Fig. 4: shows a diagram of a possible relation of a distance to a frequency of a specific pitch;
- Fig. 5: shows a diagram of a possible relation in between a plurality of distances and volumes for a first channel and for a second channel;
- Fig. 6: shows a schematic view of a method for providing a sound signal for assisting an individual;
- Fig. 7: shows a schematic view of an assistance system according to an embodiment of the invention; and
- Fig. 8: shows an exemplary illustration of an assistance system according to an embodiment of the invention.

### Detailed Description of the Embodiments

Equal or equivalent elements or elements with equal or equivalent functionality are denoted in the following description by equal or equivalent reference numbers. Even if occurring in different figures. For the sake of readability and to avoid unnecessary repetition, the reference numbers N₁, N₂ and N₃ have been consolidated and are represented as N₁₋₃ throughout the description.

In the following description, a plurality of details is set forth to provide a more thorough explanation of embodiments of the present invention. However, it will be apparent to those skilled in the art that embodiments of the present invention may be practiced without the specific details. In other instances, well known structures and devices are shown in block diagram form rather than in detail in order to avoid obscuring embodiments of the present invention. In addition, features of the different embodiments described herein may be combined with each other, unless specifically noted otherwise. Also, any of the features and functionalities described herein can be implemented in hardware or in software, or using a combination of hardware and software, as will be described in the section "implementation alternatives".

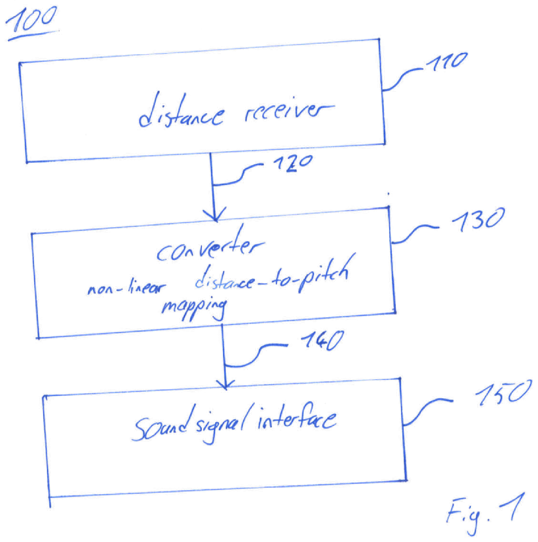

Fig. 1 shows a block diagram of an assistance system 100 for assisting an individual, the assistance system 100 comprises a distance receiver 110, a converter 130 and a sound signal interface 150. The distance receiver 110 may, for example, be configured to receive a distance 120. The converter 130 may, for example, be configured to receive the distance 120 from the distance receiver 110 and be configured to determine/obtain a sound signal 140 having a specific pitch in a nonlinear manner. The sound signal interface 150 may, for example, be configured to receive the sound signal 140 having the specific pitch.

The distance receiver 110 may, for example, be an interface connected to a distance measurement device. The connection can, for example, be done using a cable or be done using a wireless data transfer method. The distance receiver 110 can, for example, also comprise a distance measurement device that measures the distance 120 to an object. In such case, the distance receiver 110 or rather the distance measurement device can, for example, comprise a LIDAR device, a sonar device or an imaging device that obtains the distance 120. For example, a LIDAR device can comprise one LIDAR distance 120 measurement arrangement or a plurality of distance 120 measurement arrangements. For example, the LIDAR device can comprise a rotating mirror to obtain a plurality of distances 120 using a single measurement arrangement.

The converter 130 may, for example, be connected to the distance receiver 110 using a cable connection or a wireless connection. Similarly, the converter 130 can, for example, be connected with the signal interface 150 using a cable connection or a wireless connection. The converter 130 can, for example, be implemented using a digital signal processor or a microprocessor or using analog components converting the distance to into the sound signal having the specific pitch.

The sound signal interface 150 can, for example, be an interface sending the sound signal to a sound signal generating device, for example, using a cable connection or a wireless connection, or may be a sound generating device itself. The sound may be generated on the basis of the sound signal by a conventional headphone, a stereo speaker, an embedded stereo speaker, a speaker or a bone-conducting headphone. The sound signal interface 150 can, for example, comprise a stereo speaker, that is configured to generate the sound if no headphones are connected to the sound signal interface 150 or the assistance system 100.

In an embodiment of the invention, the components of the assistance system 100, specifically the distance receiver 110, the converter 130 and the sound signal interface 150, of the embodiment may be implemented in one physical device such as a handheld device similar to a laser pointer. In such an embodiment the distance 120 may be obtained by the distance receiver 110 using LIDAR and the sound may be generated by the sound signal interface 150 using a bone-conducting speaker. In another embodiment of the invention the components of the assistance system 100 are split in between one or more physical devices. For example, the distance receiver 110 may, for example, be a distance measurement device LIDAR that is a handheld device. The converter 130 may, for example, be comprised by the same handheld device or may be an extra physical device connected to the distance receiver 110. Furthermore, the sound signal interface 150 may, for example, be an individual physical device such as a headphone or a bone-conducting headphone or may be comprised by either the handheld device comprising the distance receiver 110 or the physical device comprising the converter 130. For example, the headphones may comprise the sound signal interface 150 and the converter 130 that is connected to the distance receiver 110.

In an embodiment, the converter 130 may be configured to obtain the sound signal 140 as a continuous wave signal (e.g. as a sinusoid) having a specific frequency that is associated with the specific pitch. The wave signal may, for example be obtained by the converter 130 using a DAC.

To mitigate the risk of running into non detected objects, the distance 120 may be substituted with an additional distance measure. The assistance system 100 or rather the converter 130 can, for example, be configured to send a warning sound signal as the sound signal 140, if the additional distance measure is smaller than the distance 120. The additional distance measure can, for example, be measured using sonar.

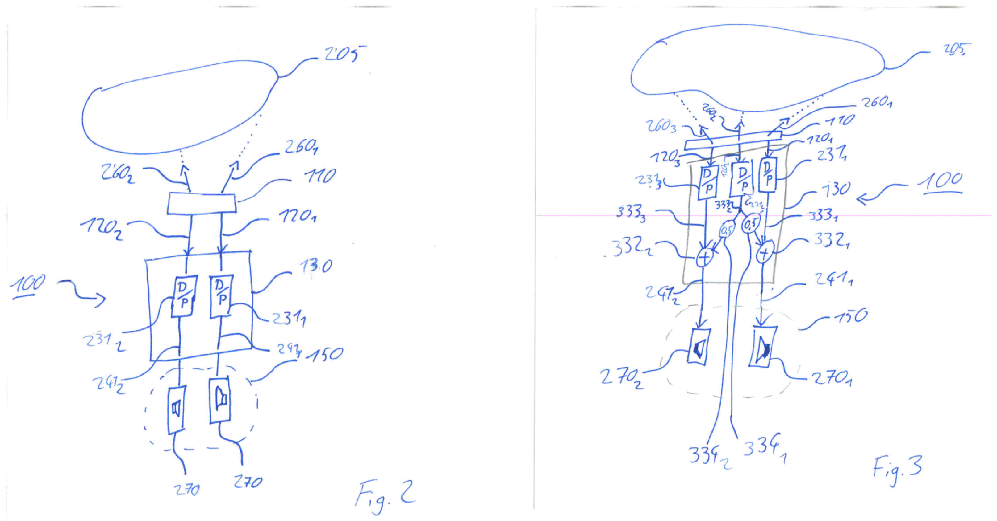

Fig. 2 shows a schematic view of an assistance system 100 comprising a distance receiver 110, and a converter 130 and a sound signal interface 150. The assistance system 100 is configured to obtain two distances 120₁ and 120₂ that are associated with the directions 260₁ and 260₂. The distance 120₁ and 120₂ can, for example, be converted by the converter 130 into the sound signal such that the sound signal is a stereo signal having a first channel 241₁ and a second channel 241₂. This conversion can be done by the distance to pitch converter 231₁ and 231₂ of the converter 130 for the distances 120₁ and 120₂, respectively. The distance to pitch converter 231₁ and 231₂ can, for example, be configured equal to each other or may, for example, be configured different from each other. The sound signal interface 150 of the assistance system 100 comprises the origins 270₁ and 270₂ for generating the sound signal as a stereo signal based on the first channel 241₁ and on the second channel 241₂.

To achieve a better experience for the individual, the converter 130 can, for example, be configured to determine the sound signal 140 in a continuous manner. For example, if the distance 120 changes with time the converter 130 can be configured to change the sound signal accordingly. However, to achieve a better experience for the individual, the converter 130 can be configured to tune the sound signal such that it depicts a continuous signal without phase changes.

The embodiment of Fig. 2 shows the assistance system 100 having two independent signal processing paths. However, the converter 130 can be configured to determine the first channel 241₁ and the second channel 241₂ such that they both comprise, at least partly, the outputs of the distance to pitch converter 231₁ ad 231₂. In such a case, the assistance system may, for example, be configured such that for the first channel 241₁ the output of the distance to pitch converter 231₁ and the output of the distance to pitch converter 231₂ are synthesized to obtain the first channel 241₁. In the synthetization or before the synthetization the output of the distance to pitch converter 231₂ may, for example, be halved. Such that the output of the distance to pitch converter 231₁ has double the volume in the first channel 241₁ compared to the output of the distance to pitch converter 231₂.

The converter 130 or rather the distance to pitch converters 231₁ and 231₂ may be configured to obtain the sound signal or rather the first channel 241₁ and 241₁ as a continuous wave signal having a specific frequency that is associated with the specific pitch. In other words, the converter 130 can, for example, be configured to obtain the sound signal as a continuous wave signal having a specific frequency whereas the specific frequency is determined by the converter 130 in dependence on the distance 120₁ and 120₂.

In an embodiment of the invention the assistance system 100 or rather the distance receiver can obtain a "strength" value in addition to the distance 120; the "strength" can represent the confidence of the detection/measurement of the distance 120, and, for example, decreases with non-reflective surfaces or in case of external (e.g. light) disturbances. The assistance system can be configured such that if the "strength" is lower than a configurable threshold, the distance receiver 110 stops returning distance 120 measurements. Accordingly, the assistance system 100 can stop producing a sound if the confidence of the measurement is low. In other words, the converter 130 can be configured to, if the distance 120 is not available or a quality of the distance 120 is determined by the converter 130 to not be sufficient, convert the distance 120, as the sound signal 140, into an inaudible sound signal or be configured to do no conversion.

In an embodiment of the invention the distance to pitch converters 231₁ and 231₂ can be configured such that they determine the specific pitch below a maximum frequency of below 15kHz or below 12 kHz or below 10 kHz or below 9 kHz or below 8kHz or may not be limited. Also, the distance to pitch converters 231₁ and 231₂ can be configured to determine the specific pitch with a minimal frequency of 300 Hz or 400 Hz or 500Hz or 600 Hz or may not be limited.

The distance to pitch converters 231₁ and 231₂ can, for example, be configured to convert or determine the specific pitch based on the distances 260₁ and 260₂ such that for a smaller distance 260₁ and 260₂ the pitch is higher when compared to a larger distance 260₁ and 260₂.

Fig. 3 shows a schematic view of an assistance system 100 according to an embodiment of the invention. The assistance system 100 can, for example be considered as an extension of the assistance system 100 of Fig. 2, wherein the system is extended with a third distance processing path.

The assistance system 100 is configured to generate a sound signal having a first channel 241₁ that is generated at a first origin 270₁ and a second channel 241₂ that is generated at a second origin 270₁ based on the distances 120₁, 120₂ and 120₃, denoted 120₁₋₃. The distances 120₁₋₃ are associated with directions 260₁₋₃, respectively. The distances 120₁₋₃ are measured by a measurement receiver 110 acting as a measurement device such that the distances 120₁₋₃ are measured in between the distance receiver 110 and an object 205. The distances 120₁₋₃ are further processed by a converter 130 to obtain the first channel 241₁ and the second channel 241₂. The converter 130 may comprise distance to pitch converters 241₁₋₃ that are configured to determine a specific pitch for each of the distances 120₁₋₃. The distance to pitch converters 231₁₋₃ may further be configured to determine preliminary sound signals 333₁₋₃ for each distance 120₁₋₃ using the respective specific pitch.

The converter 130 can be configured to generate the sound signal with the first channel 241₁ and the second channel 241₂ such that they allow a spatial interpretation of the object 205. For example, this can be done by the adder 332₁ that is generating the first channel 241₁ using the preliminary sounds signal 331₁ of the distance 120₁ at its full volume and the preliminary sounds signal 333₂ of the distance 120₂ whose volume is halved previously by a halver 334₁. Therefore, the obtained first channel 241₁ consists of distance information about the distance 120₁ at a full volume and distance information about the distance 120₂ at a half volume. The adder 332₁ can be configured to synthesize the preliminary sound signals 333₁ and the half preliminary sounds signal 333₂. The adder 332₂ can be configured to determine the second channel 241₂ on the basis of the preliminary sound signal 333₃ of the distance 120₃ at a full volume and on the basis of the preliminary sound signal 333₂ of the distance 120₂ at a half volume. The half volume can be achieved by the halver 334₂ that is configured to halve the volume of the preliminary sound signal 333₂.

The converter 130 can, for example, be configured to apply normalized coefficients to the preliminary sound signals 333₁₋₃. For example, the coefficients of all preliminary sound signals 333₁₋₃ contributing to one channel 241₁ or 241₂ or sound signal 140 can be chosen such that they sum to 1. In the present case, this would mean 0,33 for the preliminary sound signal 333₂ instead of 0,5 at the halver 334₁ and 334₂ and a coefficient of 0,66 for the preliminary sound signals 333₁ and 333₃ contributing to the first channel 241₁ and the second channel 241₂, respectively. Alternatively, or additionally, the sound signal interface 150 can, for example, be configured to automatically scale the sound signal 140 or the first chanel 241₁ or the second channel 241₂ with an amplitude higher than a threshold.

The obtained first channel 241₁ and second channel 241₂ allow a spatial orientation for the individual hearing the sound signal from the first origin 270₁ and the second origin 270₂, for example, through headphones. Through such volume determination of the preliminary sound signals the assistance system allows the individual to spatially locate the individual specific pitches. The assistance system 100 may, for example, be extended with a plurality of distances associated with different directions.

Directions 260₁₋₃ may, for example, be also understood as an order of the distances on a plane. In such case, the distances 120₁₋₃ may also be taken in parallel to each other as long as they are taken at different distance measurement arrangements. Distance measurement arrangements can, for example, be the individual LIDAR measurement devices. In such case, the assistance system may be configured to determine the respective specific pitches of the preliminary sound signals 333₁₋₃ in dependence of the order, the distances 120₁₋₃ are aligned at.

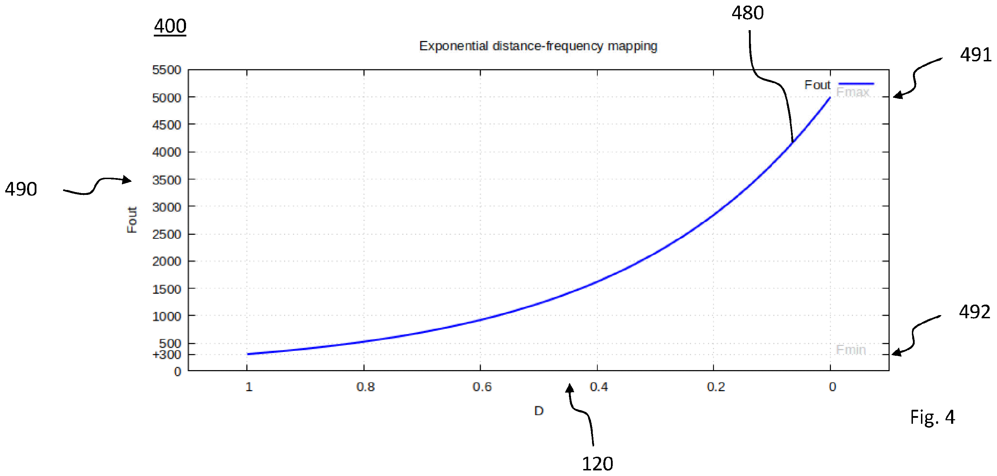

Fig. 4 shows a diagram 400 that shows an exemplary mapping 480 of an embodiment of the invention in between a distance 120 to a frequency 490. The mapping 480 is an exponential mapping in between the distance 120 and the frequency 490. With a decrease of the distance 120 the frequency 490 increases exponentially such that for a smaller distance 120 the frequency 490 is higher. The frequency 490 is determined in between a minimal frequency Fₘᵢₙ 492 and a maximal frequency Fₘₐₓ 491.

A converter 130 according to an embodiment or rather the systems system 100 according to an embodiment can, for example, be configured such that they convert the distance 120 into a continuous wave signal having the frequency 490 as it is depicted in the Fig. 4. Embodiments of the invention can, for example, be configured such that the converter 130 determines the specific frequency 490 for the distance D in between the minimal frequency Fₘᵢₙ 492 and the maximum frequency Fₘₐₓ 491, and for a defined maximum distance *Dₘₐₓ,* using: 2^{log₂}(*Fₘᵢₙ*)*+*(*D_{dif}*(*D*))*[log₂(*Fₘₐₓ*)^{-log₂}(*Fₘiₙ*)]*.* For example, the diagram in Fig. 4 was done using the parameters: Fₘᵢₙ = 300 Hz and Fₘₐₓ = 5000 Hz and wherein *D_{dif}*(D) returns a coefficient ranging from 0 to 1, representing a relative distance of D in between a minimal distance *Dₘᵢₙ* and a maximal distance *Dₘₐₓ.* The minimal distance can, for example, be 0 and the maximal distance can, for example, be 1. For example: ${D}_{dif} \left(D\right) = 1 - \frac{D - {D}_{min}}{{D}_{max} - {D}_{min}}$

For a better user experience of the individual, the mapping 490 can, for example, be also determined by embodiments of the invention such that below a specific frequency threshold, a gain or a volume of the sound signal is reduced linearly with the reduced frequency 490. This may be particularly advantageous when using bone-conduction devices, as low frequencies can be perceived as unpleasant with such technology. However, this consideration may not be relevant when using conventional headphones or speakers.

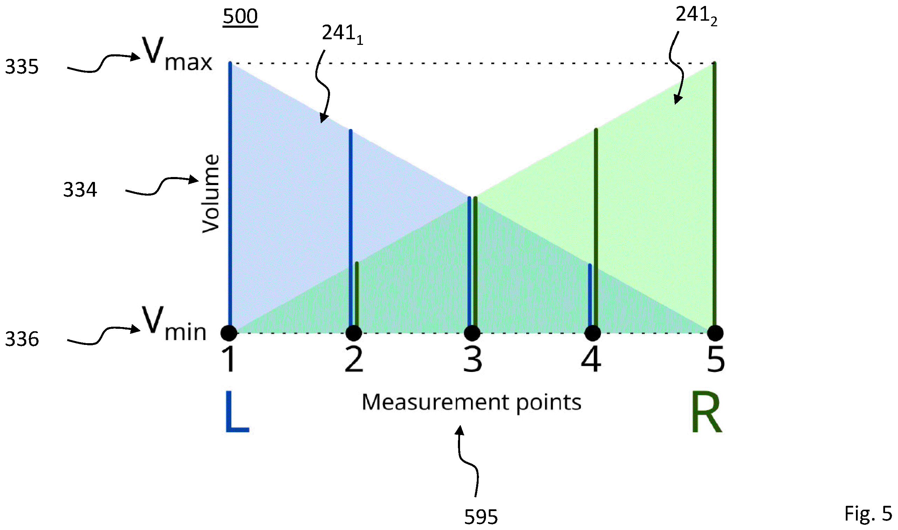

Fig. 5 shows a diagram 500 that depicts the relationship in between five measurement points 595 (measurement point 1, 2, 3, 4 and 5), relating to five distances, and a volume 334 for a first channel 241₁ and a second channel 241₂ for each of the measurement points.

Each respective measurement point of the five measurement points 595 relates to a respective distance, received by a distance receiver. The displayed relationship between the measurement points 595 and the volume 334 is an example of a volume determination of a converter 130 in dependence on a direction according to an embodiment.

The five measurement points 595 are associated each with a respective direction, which has been used to order the five measurement points 595 in their depicted sequence. The five measurement points 595 or rather the distances can also be taken in parallel to each other. In such case, the direction is relating to the direction as well as the origin of the distance measurement.

The diagram 500 shows that the leftmost measurement point is included or synthesized into the first channel 241₁ with a maximal volume 335 while the measurement points 2, 3 and 4 are included with decreasing volumes into the first channel 241₁. The rightmost point of the five measurement points 595 is not included into the first channel 241₁ or may be included into the first channel but with an inaudible volume or may be included into the first channel with a minimal volume Vₘᵢₙ 336 depending on the configuration of the converter. The first channel 241₁ may be intended for a left ear of the individual. The volume of the measurement points 595 is set such that a more left orientated measurement point of the five measurement points 595 is included into the first channel 241₁ with a higher volume compared to a more right orientated point.

For the second channel 241₂ the volume of the rightmost point, if the five measurement points 595 is set to the maximum volume 335 while the measurement points 4, 3 and 2 are included into the second channel 241₂ with decreasing volumes 334. The leftmost point of the measurement point 1 is included into the second channel 241₂ with the minimal volume or may not be included at all or may only be included with an inaudible volume. The measurement points 595 may, for example, be measured in an array like manner such that they point all the same direction, however, in such case, the direction is still dependent on the origin of the measurement point and an order of the measurement point 595 can be obtained.

A more general description of the diagram 500 would be that for N distances/measurement points 595, an assistance system or rather a converter can be configured such that the volume for each distance/measurement point *n* E {1, *...*, *N*} is determined in between a maximum volume Vₘₐₓ 335 and a minimum volume Vₘᵢₙ 336 using the following formula for the first channel 241₁: ${V}_{left} = {V}_{min} + \left(1-\frac{n - 1}{N - 1}\right) ∗ \left({V}_{max}-{V}_{min}\right)$ and for the second channel 241₂ using: ${V}_{right} = {V}_{min} + \frac{n - 1}{N - 1} ∗ \left({V}_{max}-{V}_{min}\right)$

The preliminary sound signal may be generated for a distance based on the direction associated with the distance in such a way that it creates the auditory illusion of a phantom source, meaning the individual perceives the preliminary sound signal as originating from a specific location in space where the direction directs to. Embodiments of the invention can also be configured to determine the preliminary sound signal by manipulating spatial cues such as interaural time differences (ITD), by manipulating interaural level differences (ILD) or by using spectral filtering. By carefully adjusting these parameters for the stereo sound signal, the sound signal can be "steered" to appear as though it is coming from the direction associated with the distance.

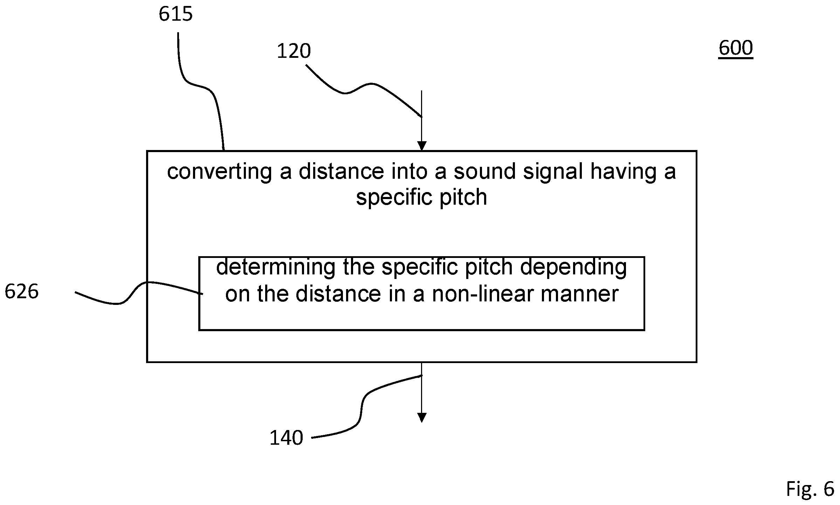

Fig. 6 shows a schematic view of a method 600 for providing a sound signal 140 for assisting an individual. The method 600 comprises converting 615 a distance 120 into a sound signal 140 having a specific pitch, wherein the converting comprises determining 626 the specific pitch depending on the distance 120 in a non-linear manner.

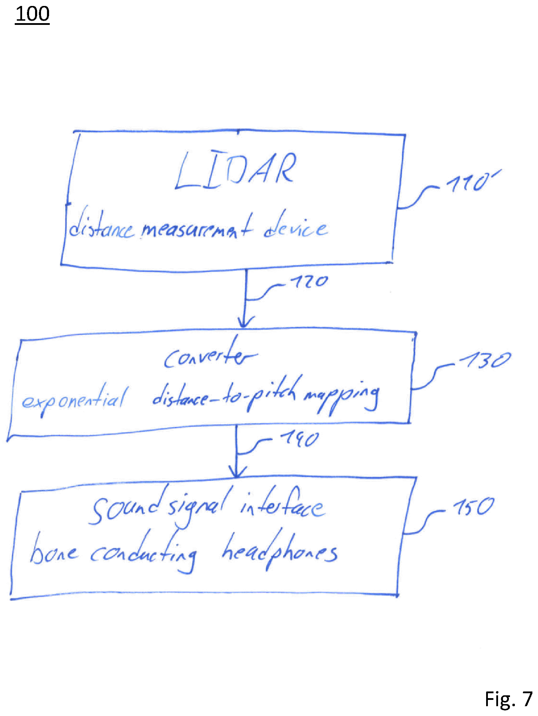

Fig. 7 shows a schematic view of an assistance system 100 according to an embodiment of the invention. The assistance system 100 comprises a distance measurement device 110', e.g., a distance receiver 110, that is configured to measure a distance 120 using LIDAR. In the assistance system 100 the distance 120 is converted by a converter 130 that is configured to convert the distance 120 in an exponential manner to the a stereo sound signal 140. The sound signal 140 is further sent to a sound interface 150 and generated using bone conducting headphones of the sound interface 150.

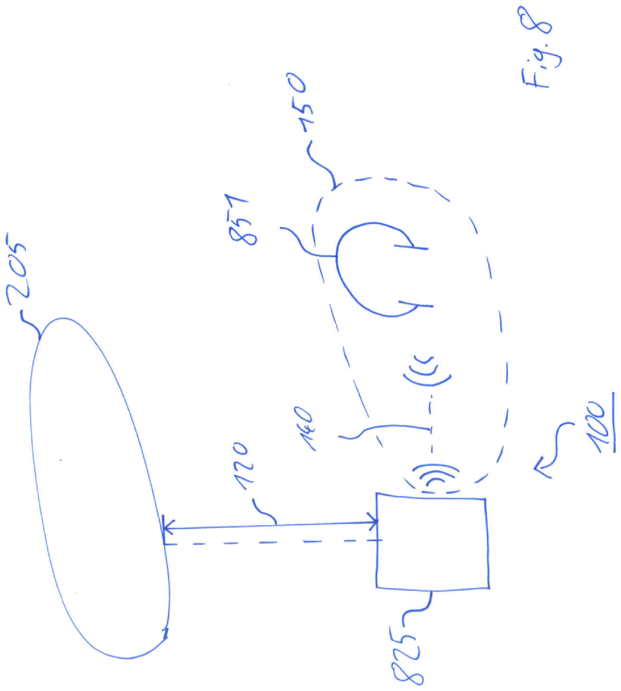

Fig. 8 shows an exemplary illustration of an assistance system 100 according to an embodiment of the invention. The assistance system 100 comprises a hand held device 825 that comprises a distance receiver that is configured to receive a plurality of distances 120, wherein the distance 120 is measured in between the hand held device 825 and an object 205. The hand held device may further comprise a converter that is configured to convert the distance 120 into a sound signal having a pitch in a non-linear manner. The assistance system can further comprise a sound interface that comprises bone conducting headphones 851 and is configured to send the sound signal 140 from the hand held device 825 to the headphones 851.

The hand held device 825 can, for example, be carried by an individual that is also wearing the headphones 851 to be assisted by the assistance system 100. The hand held device can, for example, be configured or implemented such that it is smaller than 8x5x3cm and weight less than 125g. The connection between the hand held device 825 and the headphones 851 can, for example, be also implemented using a cable connection in between the headphones 851 and the hand held device 825.

According to embodiments, the hand held device 825 can also be configured to measure a plurality of distances 120 and determine the sound signal 140 as a stereo sound signal wherein the volume of the channels and the individual pitches determined using the distances 120 is dependent on a direction of the distance 120 in relation to the hand held device 825. Additionally, the direction can also relate to a origin of the distance 120 at the hand held device if two or more measurement devices of the hand held device 825 have been used to measure the distance 120.

The description proceeds with an exemplary high level description of embodiments of the invention. Embodiments disclose a device for providing the user (e.g. individual) with an automated, high frequency (e.g. a high number of measurements of the distance per second, for example, 50Hz or 80 Hz or 100 Hz or 150Hz) and high resolution scene sonification, usable without specific training in both indoor and outdoor environments. Contrary to multiple systems relying on Al and other forms of high-level data processing, an aim of embodiments is to send to the user (e.g. individual), through the auditive channel, as much "raw data" as possible, and letting the brain perform any high level interpretation on top of it (such as, recognizing the shape of a chair as "chair"). This can, for example, be achieved by means of a small and lightweight hand-held device according to an embodiment of the invention. The small and lightweight hand-held device can, for example, be pointed freely around the user (e.g. individual), to "scan" the surroundings and get a quick understanding of their three-dimensional shape.

Once pointed in a direction (e.g. 120), the device according to an embodiment measures the distance (e.g. 120) (or "depth") to one or multiple spots (e.g. objects 205) and translates each measurement into a continuous sound (e.g. 140). The pitch of such sound is higher with shorter distances (e.g. 120), i.e. the frequency (e.g. 490) is inversely proportional to the distance (e.g. 120), so that nearby objects (e.g. 205) grab more attention than far ones. For example, such sound is generated using an exponential function (e.g. mapping 480), instead of a linear one, taking inspiration from the frequency (e.g. 490) progression used in musical instruments [11]. This creates an intuitive distance (e.g. 120) feeling and constitutes one of the main advances with respect to the existing technologies. Additional measures can be taken to avoid distortions and high frequency (e.g. 490) spikes, which would make its continuous usage unpleasant.

When multiple measurements (e.g. distances 120) are taken, sounds can be mixed using stereo panning [12] in a way that the user (e.g. individual) naturally perceives their actual horizontal distribution. The algorithms used to encode the measurements into sounds can be used for single-point, 2-point (stereo), multi-point (line) or multi-line (grid) depth measurements. It suits, for example, both LIDAR arrays or, if a depth camera is used, dense pixel grids.

A preferred embodiment is taking measurements using a LIDAR sensor, which does not have the computational complexity of digital cameras but can offer more accurate measurements and longer range compared to a sonar. LIDARs have a narrower field of view than sonars (e.g. 1-3° vs 30-50°) and a much longer detection range (up to 1km vs a few meters). A preferred embodiment uses a LIDAR that is eye-safe for other individuals around the user, it features a much longer range than a traditional cane (up to 12m), and it works both in indoor and outdoor conditions. Its accuracy can depend on the distance and light conditions, however it usually features a higher granularity than a centimeter, allowing to distinguish a smooth surface from a cobbled one.

The output (e.g. the output of a converter 130; e.g. the sound signal having the specific pitch) can be connected to any kind of headphone (e.g. comprising the origin 2701 and 2702), but wired, bone-conducting [13] headphones, as in an embodiment, are preferred, to preserve the low-latency of the system (e.g. assistance system 100) and a safe usage in outdoor environments, where sound isolation would be potentially dangerous. Bone-conducting headphones offer the additional advantage that they can be used by individuals who have, in addition to the visual impairment, a temporary or permanent hearing impairment related to the eardrum. It is worth remarking that the headphone technology is independent from embodiments of the present inventive concept, i.e. a non bone-conducting device (e.g. headphones 851), can be used as well.

Embodiments of the invention can replace a blind stick, featuring a lower weight and a range up to ten times longer, yet at a fraction of the production cost of complex devices which provide high-level scene interpretation. Since the generated sound (e.g. sound signal 140) is not language-specific, the system (e.g. assistance system 100) does not need any translation and it is suitable for users with any cultural background.

Embodiments of the invention can be designed primarily to assist visually impaired individuals. This can apply to both permanent vision impairments and temporary ones, such as in military scenarios. Other applications of embodiments of the invention might include navigation in environments where the sight is limited, for example by smoke, gas or fluids of other nature. Embodiments of the invention could be used for new gaming concepts or in artistic applications.

In the following exemplary embodiments are presented:
An embodiment of the invention is configured such that each measurement (i.e. distance 120) is, for example, mapped to a simple sinusoidal wave (e.g. other wave forms are also possible) whose frequency (e.g. 490) is not linearly, but rather exponentially proportional with the measured distance (e.g. 120). This principle is referred to as "exponential distance-frequency mapping". Rationale: when frequency (e.g. 120) increases linearly, humans perceive a logarithmic acceleration; to preserve the linearity of the perception of distance (e.g. 120), frequencies (e.g. 490) can be linked to the exponent of a power of 2 (e.g. as in mapping 480). This recalls the progression of frequencies (e.g. 490) used in most musical systems, including the "12 equal temperament" used in western music, where two pairs of notes are perceived as equidistant if their ratio is equivalent (for example: *A*3 = 220 *Hz* is perceived as distant from *A*4 = 440 *Hz,* as *A*4 is from *A*5 = 880 *Hz*)*.* Following such progression, the sound (e.g. sound signal 140) of an object (e.g. 205) which is becoming closer with a linear speed is also perceived as linearly increasing. Exponents can be computed in a way that the resulting frequency (e.g. 490) always falls within the desired output range.

Note: In embodiments, smaller distances (e.g. 120) are mapped to higher frequencies (e.g. 490), the distance (e.g. 120) is inverted in its range before the mapping is computed.

In an embodiment multiple measurements (e.g. distances 120) are taken, for example as a result of a linear array of LIDAR sensors, all sounds are summed together, using for each channel (Left or Right) a volume which is proportional to the horizontal displacement of the point in the array. Therefore, in the Left channel the leftmost point is heard with the highest volume, and the rightmost point with the lowest volume; vice-versa for the Right channel. A point in the middle of the array has the same volume in both channels. This principle is referred to as "linear cross-pan". Rationale: such volume mapping provides an immediate and intuitive stereo perception of how the obstacles are horizontally distributed, very similarly to the perception of a natural sound originating near the user. If the horizontal array of measurements is rich enough, to achieve an understanding of the surroundings in front of the user it is enough to move the device only up/down, without the need of left/right scanning.

For example, ensuring low latency and a lightweight device can be crucial to a successful device (e.g. assistance system) usage, to allow for quick scanning, perception of moving items and long-term usage. Electronic components of embodiment can be chosen, and technical measures can be taken, to keep the weight and energy consumption of the device (e.g. assistance system) as low as possible, while retaining the highest information rate. For example, the measures can include numerical methods to lower the computational cost of the sound processing, such as usage of look up tables and pre-computation of exponential functions.

The assistance system according to an embodiment can, for example, be implemented with relatively simple electronic components: a LIDAR sensor (e.g. as a distance receiver 110), a microcontroller (e.g. comprised by a converter 130), a Digital-to-Analog Converter (DAC) (e.g. comprised by a converter 130) and, for example, a rechargeable battery. Components can be carefully chosen to minimize size and weight.

An off-the-shelf LIDAR sensor (e.g. as a distance receiver 110), with size and weight appropriate for a hand-held device, can provide measurements (e.g. distances 120) with a frequency typically between 10 and 1000Hz. For each measurement (e.g. distance 120), the microcontroller (e.g. converter 130) performs the necessary operations to compute the desired output frequency (e.g. 490), generate one or more sinusoidal waveforms and fill an audio buffer for the DAC (e.g. comprised by a converter 130). Tests performed with a sensor providing 100 samples per second (e.g. of distances 120), and therefore updating the sound buffer with an interval of 10ms. With such frequency, an ESP32-like microcontroller (e.g. comprised by a converter 130) is capable of performing the necessary computations in about 0.5ms, while consuming typically less than 50mA and keeping the latency in the same magnitude as the audio buffer (~10ms). The total consumption of the whole circuitry is about 200mA; a common AA lithium battery with a capacity of 2500 mAh would allow more than 12 hours of continuous usage. In embodiments of the invention, the circuit is designed in such a way that it is possible to connect it to a portable powerbank and keep using it during the charging process, therefore further extending the usage possibilities.

The specification proceeds with a detailed explanation of an exponential distance-frequency mapping (e.g. 480) according to embodiments of the invention.

The detected distance (e.g. 120) can be mapped to an audible frequency (e.g. 490) through an exponential function with base 2 (e.g. mapping 480). The inverse of the distance (e.g. 120) can be mapped to the exponent, so that closer objects result in higher frequencies. The range of the output frequency (e.g. 490) can be carefully chosen depending on multiple factors, including the age of the users (e.g. individual). The range of frequencies (e.g. 490) perceivable by humans is considered to be approximately 20Hz...20kHz, but older individuals perceive a narrower range; this can be particularly relevant for vision-related assistive technologies, because about ¾ of visually impaired individuals are older than 50 and, at this age, the range of hearable frequencies (e.g. 490) is often limited to 12k-15k Hz. Moreover, very high / very low pitches can be unpleasant and/or difficult to perceive in loud environments, therefore the output range can be restricted. A range which should suit most users and headphones would, for example, be from around 300 Hz to 5-10 kHz; the range could be customized per user, depending on the age and individual sensitivity.

The sampling rate of the DAC (e.g. of the converter 130) can, for example, be then set to at least twice the maxim frequency (e.g. 491), because of the Nyquist-Shannon theorem [14]; in the tests performed so far, the maximum frequency was 8 kHz and the sampling rate of the DAC has been set to 16 kHz. It can be recommended to keep the frequency (e.g. 490) range constant, to provide the user with a consistent experience and allow them to learn which pitch corresponds to which distance (e.g. 120). However, at least a mode switch can be implemented, consisting in the possibility to decide between two distance (e.g. 120) ranges: one of the two modes could map a subset of the distance (e.g. 120) range to the same frequency (e.g. 490) output, resulting in bigger frequency (e.g. 490) differences per distance (e.g. 120) unit and allowing to detect differences in the scale of a few millimeters. This is intuitively perceived as a "zoom", for indoor usage or simply when an item needs to be inspected with more attention. For example: the "normal mode" could map the distances (e.g. 120) 1-1000 cm to (e.g. a frequency 490 of) 300 - 8000 Hz, while the zoom mode could map just (e.g. the distances 120) 1-200 cm to the same frequency (e.g. 490) range. The mode selection can, for example, be configured such that it does not influence the exponential formula detailed hereafter, where the distance (e.g. 120) is abstracted as D.

Let the detected distance D (e.g. 120) be in the range (0... 1), and the desired range of the output frequency (e.g. 490) Fₘᵢₙ *... Fₘₐₓ*; the output frequency can, for example, then be computed as: ${F}_{out} = {2}^{{log}_{2} \left({F}_{min}\right) + \left(1-D\right) ∗ \left[{log}_{2}\left({F}_{max}\right)-{log}_{2}\left({F}_{min}\right)\right]}$

In the formula, (1 - D) can be used to obtain higher frequencies (e.g. 480) with smaller distances instead of bigger ones, and the output frequency is guaranteed to fall into the range Fₘᵢₙ *... Fₘₐₓ* (e.g. 492 ... 491). When D = 0 (minimum distance), the resulting frequency is Fₘₐₓ (e.g. 491); when D *=* 1 (maximum distance) the resulting frequency is Fₘᵢₙ (e.g. 492).

For example, for a detected distance in between the range (*Dₘᵢₙ* ... *Dₘₐₓ*), the following formula, or a variation thereof, may be used for the distance D (e.g. 120): ${F}_{out} = {2}^{{log}_{2} \left({F}_{min}\right) + \left({D}_{dif}\left(D\right)\right) ∗ \left[{log}_{2}\left({F}_{max}\right)-{log}_{2}\left({F}_{min}\right)\right]}$ wherein *D_{dif}*(D) returns a coefficient ranging from 0 to 1, representing the relative distance of D in between the minimal distance *Dₘᵢₙ* and the maximal distance *Dₘₐₓ.* For example: ${D}_{dif} \left(D\right) = 1 - \frac{D - {D}_{min}}{{D}_{max} - {D}_{min}}$

Fig.4 shows a plot of the function (e.g. mapping 480) that can be used for the "exponential distance-frequency mapping"

Samples can then generated (e.g. by the converter 130) to produce a continuous sinusoid, with the given frequency (e.g. 490), for each detection point (e.g. of distance 120); the sample generation can be implemented in a way that frequency (e.g. 490) changes do not also cause sudden phase changes, guaranteeing a pleasant sound without clicks or similar audio artifacts.

The specification proceeds with a detailed explanation of mixing multiple measurements (e.g. distances 120) with linear cross-pan according to embodiments of the invention.

To maximize the information throughput, multiple point measurements (e.g. distances 120) can be performed simultaneously and encoded in the same sound (e.g. sound signal 140). The human hearing system is natively capable of estimating the physical location of a sound source; it does so by exploiting multiple phenomena of the sound domain, such as frequency (e.g. 490) changes, reverb characteristics and intensity difference (e.g. of volume 334) between the ears. The latter, also referred to as "pan", is particularly efficient to localize the source on the transverse plane, due to the horizontal displacement of the ears; in case multiple detection sensors (e.g. of distances 120) are available, it can therefore be particularly convenient to group them horizontally, and "play" them simultaneously. Using this principle, the system (e.g. assistance system 100) can "distribute" the sound of a detected measurement (e.g. of distance 120) to the left and right ears with different volumes (e.g. 334), leveraging the stereo perception innate in all individuals and particularly sharp in the well-trained hearing system of persons with heavy visual impairments.

In practice, for example, it can be desired that the measurement point "closest" to the left ear to have maximum value (e.g. volume 334) in the left channel, and minimum in the right one (e.g. 241₁ and 241₂ or vice versa); vice-versa for the right ear. For the sake of explanation it can be defined Vₘₐₓ *=* 1 (e.g. 335) and Vₘᵢₙ = 0 (e.g. 336), but it can also be Vₘᵢₙ > 0 (e.g. 336) (i.e. the point most distant from an ear is still hearable in the same ear), which can feel very intuitive if the field of view (FoV) of the LIDAR array (e.g. distance receiver 110 or distance measurement device) is particularly narrow. Let the N be the number of detection points (e.g. of distances 120), all equally distant (e.g. or with an equal difference in measurement direction, e.g. measured in an angle in between the distances) from each other, and n ∈ (1... N) the index of each point (e.g. distance 120) numbered from the leftmost to the rightmost. The cross pan (e.g. of the distances 120) will then, for example, use as left and right volumes of the point n: ${V}_{left} = {V}_{min} + \left(1-\frac{n - 1}{N - 1}\right) ∗ \left({V}_{max}-{V}_{min}\right)$ ${V}_{right} = {V}_{min} + \frac{n - 1}{N - 1} ∗ \left({V}_{max}-{V}_{min}\right)$

For example, with a LIDAR array of *N* = 5 points (e.g. distances 120), the leftmost point (n = 1) (e.g. distance 120) has *V_{left} =* 1 and *V_{right}* = 0 (i.e. it is only hearable in the left ear), the rightmost point (n = 5) (e.g. distance 120) has inverted values (e.g. inverted volumes 334), and the middle point (n = 3) (e.g. distance 120) has *V_{left}* = 0.5 and *V_{right}* = 0.5 (i.e. it is hearable with the same volume (e.g. 334) in both ears). Fig. 5 is a visual representation of this example. Fig. 5 shows example volume (e.g. 334) profiles for 5 measurements points (e.g. measurement points 595 for distances 120) in the L (light blue) and R (light green) channels (e.g. 241₁ and 241₂).

After the linear cross-pan is applied and the appropriate volume (e.g. 334) can be set for each sinusoid (e.g. obtaining the preliminary sound signal 333) and each channel (e.g. 241₁ and 241₂), they are summed up (e.g. synthesized). To avoid that the resulting value (e.g. volume 334) is higher than the maximum amplitude and causes audio clipping, inter alia, the following techniques can be applied:
1. The sum (e.g. of each channel 241₁ and 241₂) can be divided by a normalizing constant *Cₙₒᵣₘ,* defined so that the sum is guaranteed to fall within the maximum amplitude. Its value can be computed by summing all volume (e.g. 334) values of the array points (e.g. distances 120), which for linear functions and null minimum volumes is simply equivalent to *Cₙₒᵣₘ = N*/2 (in the example in Fig. 5, *Cₙₒᵣₘ* = 2.5)
2. Dynamic range compression [15] can be applied to the signal (e.g. sound signal 140; e.g. first channel 241₁ and second channel 241₂), either in software or in hardware.

The description proceeds with additional notes and techniques according to embodiments of the invention.

Generating a sinusoid (e.g. as a sound signal 140 or as a preliminary sound signal 333) by sampling a direct formula can produce sudden phase changes when the frequency (e.g. 480) changes; these high frequency (e.g. 480) spikes are perceived as clicks or similar artifacts in the output sound, making it unpleasant for the user (e.g. individual). To prevent this issue, the sinusoid generation algorithm can be designed to preserve the current phase on frequency (e.g. 480) changes, ensuring that the produced waveform (e.g. of the sound signal 140 or of the preliminary sound signal 333) changes smoothly from one frequency (e.g. 480) to another without any phase gap (e.g. such that the sound signal 140 is a continuous sound signal).

Bone-conducting headphones (e.g. comprised by or connected to a sound signal interface 150) might cause unpleasant vibration when transmitting low frequencies (e.g. 480). To compensate for this phenomenon, the gain (e.g. volume 334) of the soundwave (e.g. of the sound signal 140 or of the preliminary sound signal 333) can be reduced linearly when the frequency (e.g. 480) is lower than a given threshold. In tests performed so far, good results of embodiments of the invention have been achieved by reducing the gain (e.g. volume 334) linearly from 100% at 600 Hz to 10% at 300 Hz (minimum of the output range). This reduction can be applied before any other volume (e.g. 334) or amplitude normalization and before multiple sinusoids are summed together (e.g. before multiple preliminary sound signals 333 are synthesized).

If the LIDAR (e.g. a distance receiver 110 or a distance measurement device) does not provide any measurement, for example, due to light saturation, malfunctions or other causes, embodiments of the invention can be configured to generate no sound. This informs the user (e.g. individual) that no data is available.

The device (e.g. assistance system 100) can be configured to produce a continuous sound (e.g. sound signal 140) or be completely silent unless a pushbutton is pressed. The latter approach can be recommended, so that the user (e.g. individual) can decide when the scanning is desired or silence is preferred.

Some specific types of glass might be transparent to the light in the wavelength used by the LIDAR sensor (e.g. distance receiver 110 or distance measurement device), and be therefore undetectable. Sonars are low-range and have a wide FoV, therefore they cannot replace the LIDAR (e.g. distance receiver 110 or distance measurement device); however, they are sensitive to any kind of solid material, including glass. Therefore, an extended version of the device (e.g. assistance system 100) could include a sonar, which could activate a vibration motor or generate a sound alarm in case nothing is detected by the LIDAR (e.g. distance receiver 110 or distance measurement device) but something is detected by the sonar, as an additional safety measure in case of "transparent" materials.

A small armband can be provided with the device (e.g. assistance system 100 or distance receiver 110 or distance measurement device), to reduce the risk of the device falling off from the hand.

In the following, prior art approaches are summarized and it is discussed how the concept provided herein can improve the disclosed approaches.

The concept of measuring a distance with a sensor (be it a sonar, Time-of-flight sensor, LIDAR or other technology) and translating it into a sound with a varying characteristic (pitch, tone, amplitude, pauses) is a classic educational exercise in hardware development. We can find a common application in parking assistance systems of modern cars: a proximity sensor informs the user about the distance with respect to potential obstacles, by means of beeping sounds whose frequency increases with the proximity [16], especially when moving backwards. The non-linear pitch determination as described herein may also be incorporated into parking sensors.

Previous experiments have yielded a prototype of glasses with LIDAR. A 2010 video from Sparkfun electronics showing a pair of "glasses" augmented with a LIDAR and a piezo-speaker mentions a potential application for blind users [17]. However, the device does not implement any technique to improve the intuitiveness of the frequency perception as it is done with the non-linear determination of the specific pitch, neither it mixes multiple measurements (e.g. distances 120) nor attempts to make the device usable for extended scannings (it requires continuous head movements, the sound is based on a square wave, etc.).

The device called Miniguide [18] features obstacle detection through a sonar, providing audio or haptic (vibration) feedback to the user. This device differs from and falls short of the presented concept in at least the following aspects: The user/individual can set two different audio modes, one of which produces a sound with frequency inversely proportional to the distance. No mention is done to a non-linear frequency (e.g. 480) mapping (e.g. 490). Measurement is always single point, and no stereo sound signal is used. Since the base technology is a sonar, the device can detect large obstacles, without fine-grained information. Range is adjustable and limited to 8m.

Previous approaches also include smart glasses for image sonification. Among all the examined commercial devices, the one coming closest to the low-level approach presented in this report is NIIRA, produced from the Spanish company Eyesynth [19] and described in patent EP3308759B120. This is a pair of glasses equipped with multiple cameras and connected to an external device (computer and/or battery). Unlike other solutions based on augmented glasses, which aim to provide the user/individual with high level information, NIIRA encodes some depth points into sounds, leaving the information "low level". However, at a closer look there are multiple crucial differences with respect to the presented concept, making it a different system. They include at least:
- The distance measurement (depth) is mapped to a volume (e.g. 334) change instead of a pitch (frequency (e.g. 480)) change. Instead, frequency (e.g. 480) is mapped to the Y position (height) in the scanned image.
- The scan points are assigned to a segment of the frequency (e.g. 480) range in a linear way, not compensating for the human logarithmic perception. Embodiments of the invention however, are adapted to the human hearing perception using the non-linear determination of the sound signal.
- The first-level arrangement of an array of measurements is vertical, not horizontal as in embodiments of the invention, therefore not exploiting the natural stereo perception of humans. A "landscape" mode uses multiple vertical bands.
- The output frequency (e.g. 480) range is mentioned to be 100-18k Hz, not taking into account that the hearable frequency (e.g. 480) range heavily reduces with the age of the user.
- There is no focus on low-latency: the system is based on stereo cameras and mentions the possibility of wireless transmissions, which increase the latency by tens or hundreds of milliseconds, over the threshold perceivable by humans.
- The system is head mounted, requiring neck movements to scan a large area in the vertical band mode, which is impractical for long usage.

### Implementation alternatives:

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The apparatus described herein, or any components of the apparatus described herein, may be implemented at least partially in hardware and/or in software.

The methods described herein may be performed using a hardware apparatus, or using a computer, or using a combination of a hardware apparatus and a computer.

The methods described herein, or any components of the apparatus described herein, may be performed at least partially by hardware and/or by software.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

### References:

[1] https://en.wikipedia.org/wiki/White_cane
[2] https://www.gosense.com/rango-smart-white-cane/
[3] https://pamtrad.co.uk/product/miniguide/
[4] https://wewalk.io/en/product/
[5] https://bielglasses.com/
[6] https://www.dotlumen.com/glasses
[7] https://biped.ai/eu/
[8] https://7sense.ee/
[9] https://en.wikipedia.org/wiki/Human_echolocation
[10] https://www.newyorker.com/culture/the-new-yorker-documentary/a-pioneer-of-echolocation-for-the-blind-in-echo
[11] https://en.wikipedia.org/wiki/Equal_temperament
[12] https://en.wikipedia.org/wiki/Panning_(audio)
[13] https://en.wikipedia.org/wiki/Bone_conduction
[14] https://en.wikipedia.org/wiki/Nyquist%E2%80%93Shannon_sampling_theorem
[15] https://en.wikipedia.org/wiki/Dynamic_range_compression
[16] https://en.wikipedia.org/wiki/Parking_sensor
[17] https://www.youtube.com/watch?v=Qt29l6pTHzE
[18] https://pamtrad.co.uk/product/miniguide/
[19] https://eyesynth.com/?lang=en
[20] EP3308759A1 - TRAGBARES SYSTEM FÜR BLINDE ODER SEHBEHINDERTE PERSONEN ZUR INTERPRETATION DER UMGEBUNG DURCH GERAUSCH ODER BERÜHRUNG

## Claims

1. Assistance system (100) for assisting an individual, comprising
a distance receiver (110) receiving a distance (120) to an object (205);
a converter (130) for converting the distance (120) into a sound signal (140) having a specific pitch;
a sound signal interface (150) outputting the sound signal (140) to the individual;
wherein the converter (130) is configured to determine the specific pitch depending on the distance (120) in a non-linear manner.

2. Assistance system (100) of claim 1,
wherein converter (130) is configured to determine the specific pitch such that the specific pitch is below a maximal frequency (491) of 10kHz.

3. Assistance system of any of the claims 1 to 2,
wherein the converter (130) is configured to determine for a first distance (120) a first specific pitch and for a second distance (120) a second specific pitch, wherein the converter (130) is configured to determine the first specific pitch and the second specific pitch such that the first specific pitch is higher than the second specific pitch if the first distance (120) is smaller than the second distance (120).

4. Assistance system of any of the claims 1 to 3,
wherein the converter (130) is configured to determine the specific pitch depending on the distance (120) in an exponential manner.

5. Assistance system (100) of any of the claims 1 to 4,
wherein the converter (130) is configured to determine for the specific pitch a specific frequency (480) between a minimal frequency *Fₘᵢₙ* (492) and a maximal frequency Fₘₐₓ (491);
wherein the converter (130) is configured utilize a maximal distance *Dₘₐₓ*;
wherein the converter (130) is configured to determine the specific frequency (480) for the distance *D* (120) using ${2}^{{log}_{2} \left({F}_{min}\right) + \left({D}_{dif}\left(D\right)\right) ∗ \left[{log}_{2}\left({F}_{max}\right)-{log}_{2}\left({F}_{min}\right)\right]} ,$
wherein *D_{dif}*(D) returns a coefficient ranging from 0 to 1, representing the relative distance of *D* in between the minimal distance *Dₘᵢₙ* and the maximal distance *Dₘₐₓ.*

6. Assistance system (100) of any of the claims 1 to 5,
wherein the sound signal interface (150) is configured to, below a frequency (480) threshold of the specific pitch, reduce a gain linearly with reduced pitch.

7. Assistance system (100) of any of the claims 1 to 6,
wherein the distance receiver (110) is configured to receive the distance (120) and a direction (260) to the object (205) associated with the distance (120);
wherein the converter (130) is configured to convert the sound signal (140) as a stereo signal having a first channel (241₁) associated with a first volume (334) and having a second channel (241₂) associated with a second volume (334);
wherein the converter (130) is configured to determine the first volume (334) and the second volume (334) using the direction (260); and
wherein the converter (130) is configured to utilize the specific pitch for the first channel (241₁) and the second channel (241₁).

8. Assistance (100) system of any of the claims 1 to 7,
wherein the distance receiver (110) is configured to, as the distance (120), receive a first distance (120) and a second distance (120);
wherein the converter (130) is configured to convert the first distance (120) and the second distance (120) into the sound signal (140) as a stereo signal with a first channel (241) having a first specific pitch and with a second channel (241) having a second specific pitch, and
wherein the converter (130) is configured to determine the first specific pitch depending on the first distance (120) in a non-linear manner and determine the second specific pitch depending on the second distance (120) in a non-linear manner.

9. Assistance system (100) of any of the claims 1 to 8,
wherein the distance receiver (110) is configured to, as the distance (120), receive a plurality of distances (120) each respective distance (120) being associated with a respective direction (260) out of a plurality of directions (260);
wherein the converter (130) is configured to convert the sound signal (140) as a stereo signal having a first channel (241) and a second channel (241);
wherein the converter (130) is configured to determine a respective preliminary sound signal (333) having a respective specific pitch out of a plurality of preliminary sound signals (333) for each respective distance (120) out of the plurality of distances (120), depending on the respective distance (120);
wherein the converter (130) is configured to determine the first channel (241) by synthesizing one or more preliminary sound signals (333) of the plurality of preliminary sound signals(333) , wherein the converter (130) is configured to add each of the one or more preliminary sound signals (333) with a specific first volume (334) out of one or more first volumes (334) and wherein the converter is configured to determine the second channel (241) by synthesizing one or more preliminary sound signals (333) of the plurality of preliminary sound signals(333), wherein the converter (130) is configured to add each of the one or more preliminary sound signals (333) with a specific second volume (334) out of one or more second volumes (334);
wherein, optionally, the converter (130) is configured to determine the one or more first volumes (334) and the one or more second volumes (334) in dependence on the plurality of directions (260).

10. Assistance system (100) of claim 9,
wherein the plurality of distances (260) comprises N distances (120);
wherein the distance receiver (110) is configured to receive the plurality of distances (120) with a numbering n for each distance (120) of the plurality of distances (120) depending the direction (260) associated with the distance n (120);
wherein the converter (130) is configured to determine the one or more first volumes (334) and the one or more second volumes (334) in between a maximal volume Vₘₐₓ (335) and a minimal volume Vₘᵢₙ (336);
wherein the converter (130) is configured to determine the respective first volume (334) of the one or more first volumes (334) being associated to the respective distance n (120) using ${V}_{min} + \left(1-\frac{n - 1}{N - 1}\right) ∗ \left({V}_{max}-{V}_{min}\right)$
and wherein the converter (130) is configured to determine the respective second volume (334) of the one or more second volumes (334) being associated to the respective distance n (120) using ${V}_{min} + \frac{n - 1}{N - 1} ∗ \left({V}_{max}-{V}_{min}\right) .$

11. Assistance system (100) of any of the claims 9 to 10,
wherein the distance receiver (110) is configured to receive the plurality of distances (120) such that their respective directions (260) are spread across a plane.

12. Assistance system (100) of any of the claims 7 to 11,
wherein the sound signal interface (150) is configured to output the first channel (241) at a first origin (270) and the second channel (241) at a second origin (270);
wherein the converter (130) is configured to determine a first respective volume (334) of the respective distance (120) and a second respective volume (334) of the respective distance (120) such that the first respective volume (334) is higher than the second respective volume (334) if the respective direction (260) of the respective distance (120) directs more towards the first origin (270) compared to the second origin (270).

13. Assistance system (100) of any of the claims 1 to 12,
wherein the converter (130) is configured to convert the distance (120) into the sound signal (140) having the specific pitch by obtaining a wave signal having a specific frequency (480) associated with the specific pitch as the sound signal (140); or
wherein the distance receiver (110) is a distance measurement device, that is configured to obtain the distance (120) as a distance (120) between the distance measurement device and the object (120); or
wherein the distance measurement device is a movable device, that is movable by the individual; or
wherein the distance measurement device uses LiDAR to measure the distance (120); or
wherein the assistance system further comprises a sonar receiver receiving a sonar signal, indicating an additional distance measure along a same direction or a similar direction as a direction (260) of the distance (120) to the object (205); wherein the converter (130) is configured to determine the pitch depending on the distance (120) and the additional distance measure; or
wherein the sound signal interface (150) is configured to transmit the sound signal (140) using bone conduction; or
wherein the distance receiver (110) is configured to receive, as the distance (120), a time-varying distance; wherein the converter is configured to convert the time-varying distance into the sound signal (140) such that the sound signal (140) is a continuous sound signal.

14. Method (600) for providing a sound signal (140) for assisting an individual, comprising
converting (615) a distance (120) into a sound signal (140) having a specific pitch,
and determining (626) the specific pitch depending on the distance (120) in a non-linear manner.

15. A computer program for implementing the method of claim 14 when being executed on a computer, a micro controller or signal processor.
